# EUROPEAN PATENT APPLICATION

(11) **EP 2 821 898 A1**
(43) Date of publication of application: **07.01.2015**
(21) Application number: 13755196.6
(22) Date of filing: 27.02.2013
(51) Int. Cl.: G06F 3/041

(54) **MOBILE TERMINAL DEVICE, METHOD FOR PREVENTING OPERATIONAL ERROR, AND PROGRAM**

(30) Priority: 02.03.2012 JP 2012046331
(71) Applicant: NEC CASIO Mobile Communications, Ltd., Kawasaki-shi Kanagawa 211-8666 (JP)
(72) Inventor: SATOU, Yoshihiro, Kawasaki-shi Kanagawa 211-8666 (JP)
(74) Representative: Vossius & Partner
(86) International application number: PCT/JP2013/001154
(87) International publication number: WO 2013/128911

(57) **Abstract**

[PROBLEM TO BE SOLVED] An erroneous operation is prevented during a normal touch operation, without requiring a specific operation.

[SOLUTION] A mobile terminal device comprises a display means 20, a touch panel 21 for detecting a touch operation at least on a display area of the display means 20, a judgment means 22 for judging whether or not a contact area of the touch operation is equal to or larger than a predetermined threshold value when the touch operation on an outer side region 21b which is the outer peripheral portion of the touch panel 21 is detected, and a control means 23 for disabling the touch operation on the outer side region 21b when judged that the contact area of the touch operation on the outer side region 21b is equal to or larger than the predetermined threshold value.

## Description

### TECHNICAL FIELD

The present invention relates to a mobile terminal device, a method for preventing operational errors, and a program.

### BACKGROUND ART

In reference to a cellular phone including a touch panel, when a user operates the cellular phone with one hand while holding onto a hand strap in a train, the touch panel is operated with the user's thumb. However, in recent years, the range of a touch operation on the touch panel is extended in accordance with an increase in size of a display section, and when the farthest portion is operated the base of a thumb touches the touch panel, which causes an erroneous detection and an erroneous operation.

For example, in Patent Document 1, there has been proposed a technology in which another touch sensor is separately attached at a portion where a palm is touched, besides a touch sensor in the display section, and while the touch sensor senses the palm, content operations such as character input can be performed, and when a content is dragged while the palm is detached, scrolling can be performed.

Also, in Patent Document 2, there has been proposed a technology in which a specific slide operation is performed in a specific region on the touch panel, and the reaction region of the touch panel is turned into an insensitive region, whereby the erroneous operation by a user is prevented.

Also, in Patent Document 3, there has been proposed a technology in which the outer peripheral area of the touch panel, where there is a possibility that an erroneous operation is made when the touch panel is erroneously touched during the operation of the case, is temporarily disabled, whereby the erroneous operation is prevented.

### PRIOR ART DOCUMENTS

### PATENT DOCUMENTS

Patent Document 1: JP 2007-233649
Patent Document 2: JP 2010-009335
Patent Document 3: JP 2011-034196

### SUMMARY OF INVENTION

### Problem to be Solved by the Invention

However, in the above-described Patent Documents 1 to 3, there is a problem in that, although the specific region of the touch panel is turned into the insensitive region or disabled based on predetermined conditions or predetermined operations, whereby the erroneous operation in the region can be prevented, but erroneous operations at the time of the touch operation on a normal touch panel cannot be prevented. Also, there is a problem in that, when the touch operation in the region continuously transfers (slides) to the reaction region, the erroneous operation cannot be prevented. Furthermore, there is a problem in that, once the specific region is turned into the insensitive region or disabled, it is necessary that the condition is released or that the operation for releasing the condition is perform, whereby the operability is reduced.

An object of the present invention is to provide a mobile terminal device, a method for preventing operational errors, and a program, which can prevent an erroneous operation during a normal touch operation without requiring a specific operation.

### Means for Solving the Problem

A mobile terminal device of the present invention is a mobile terminal device comprising: a display means; a touch panel for detecting a touch operation at least on a display area of the display means; a judgment means for judging whether or not a contact area of the touch operation is equal to or larger than a predetermined threshold value when the touch operation on an outer side region which is an outer peripheral portion of the touch panel is detected; and a control means for disabling the touch operation on the outer side region when judged that the contact area of the touch operation on the outer side region is equal to or larger than the predetermined threshold value.

A method for preventing operational errors according to the present invention is a method for preventing operational errors, comprising: a detecting step of detecting a touch operation, by means of a touch panel for detecting the touch operation at least on a display area of a display means, on an outer side region which is an outer peripheral portion of the touch panel; a judging step of judging whether or not a contact area of the touch operation on the outer side region is equal to or larger than a predetermined threshold value; and a disabling step of disabling the touch operation on the outer side region when judged that the contact area of the touch operation on the outer side region is equal to or larger than the predetermined threshold value.

A program of the present invention is a program to be executed by a computer of a mobile terminal device including a display means and a touch panel for detecting a touch operation at least on a display area of the display means, the program comprising: a touch operation detecting function of detecting the touch operation on an outer side region which is on an outer peripheral portion of the touch panel; a judgment function of judging whether or not a contact area of the touch operation on the outer side region is equal to or larger than a predetermined threshold value; and a touch operation control function of disabling the touch operation on the outer side region when judged that the contact area of the touch operation on the outer side region is equal to or larger than the predetermined threshold value.

### Effect of the Invention

According to one aspect of the present invention, an erroneous operation can be prevented during a normal touch operation without requiring a specific operation.

### BRIEF DESCRIPTION OF DRAWINGS

FIG. 1 is a block diagram illustrating the configuration of a mobile terminal device 1 such as a cellular phone according to the first embodiment of the present invention.
FIG. 2 is a flowchart to describe the operation of the mobile terminal device 1 of the first embodiment.
FIG. 3 is a schematic view to describe a state when a touch operation is detected in the first embodiment.
FIG. 4 is a schematic view to describe a state when the touch operation is detected in the first embodiment.
FIG. 5 is a schematic view illustrating the modification example of a judgment area in an out-of-display touch sensor region 102b of the mobile terminal device 1 of a second embodiment.
FIG. 6 is a schematic view illustrating the modification example of the judgment area in the out-of-display touch sensor region 102b of the mobile terminal device 1 of the second embodiment.
FIG. 7 is a schematic view illustrating the relation between the display area of a display section 15 and an outer side region for detecting the erroneous operation on a touch panel 16, according to a third embodiment.
FIG. 8 is a block diagram illustrating the configuration of Supplementary Note 1.

### DESCRIPTION OF EMBODIMENTS

Hereinafter, the embodiment of the present invention will be described referring to drawings.

### A. First Embodiment

First, the first embodiment of the present invention will be described.

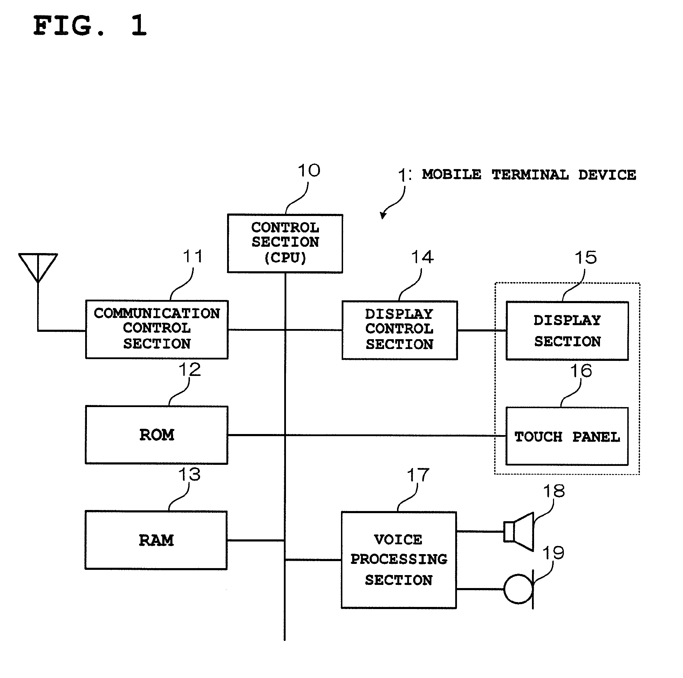

FIG. 1 is a block diagram illustrating the configuration of a mobile terminal device 1 such as a cellular phone according to the first embodiment of the present invention. In the diagram, the control section (CPU: Central Processing Unit) 10 of the mobile terminal device 1 executes a predetermined program (OS: Operating System), controls the operations of each section, and executes various application programs. A communication control section 11 connects to a cellular phone network and performs voice call/data communication, as well as connects to the Internet network and performs data communication.

A ROM (Read Only Memory) 12 stores various control programs, image correction programs, and the like, which are executed by the control section 10 and stores data used for these programs. A RAM (Random Access Memory) 13 stores data and various application programs, which are temporarily required for the control section 10 to execute the programs. Note that the ROM 12 and the RAM 13 may be a rewritable non-volatile memory such as a flash memory.

A display control section 14 controls the display of a display section 15 under the control of the control section 10. In particular, in the present embodiment, the display control section 14 controls the display screen of the display section 15 according to the control of the control section 10 such that the display screen of the display section 15 is in the display state stored corresponding to the touch pattern.

The display section 15 is made up of a display device such as a color liquid crystal panel and organic electroluminescence and displays various data, a menu screen, icons, still images, moving images, and the like. A touch panel 16 is arranged on the display section 15 and can detect a plurality of touch positions in conjunction with the display of the display section 15 and detect the center coordinate of the contact with a human body and its approximate contact area.

In particular, the touch panel 16 of the first embodiment includes a display touch sensor region 102a in which a touch operation on the display area of the display section 15 is detected, and an out-of-display touch sensor region 102b in which the touch operation is detected in a manner to cover a wider area, at the periphery of the outside of the display area. Note that the type of touch panel and the configuration and structure of hardware are not directly related to the present invention, and therefore its detailed description will be omitted.

A voice processing section 23 converts voice data into an analog signal and outputs it from a speaker 18, and converts a voice signal inputted from a microphone 19 into digital data.

In particular, in the first embodiment, when the touch detection position on the touch panel 16, that is, the touch a contact area of which is wider than the area of a fingertip, such as that of the base of a thumb, is detected in the out-of-display touch sensor region 102b, the control section 10 tracks the transfer of the touch position and controls to prevent an erroneous operation by that, even when the touch position enters the display touch sensor region 102a in which the touch operation on the display area is detected, the touch is not processed as a normal touch operation.

Next, the operation of the above-described first embodiment will be described.

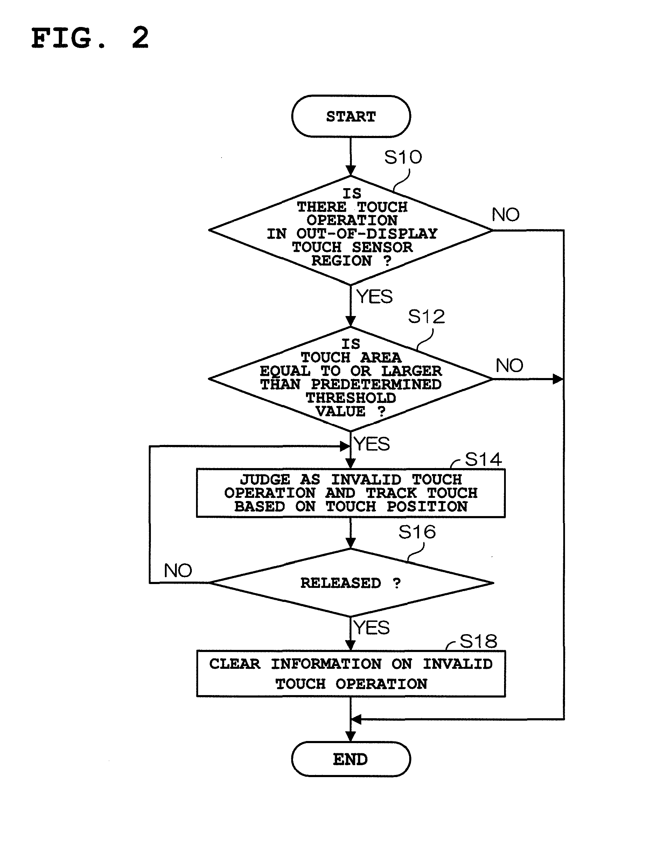

FIG. 2 is a flowchart to describe the operation of the mobile terminal device 1 of the first embodiment. Note that the flowchart illustrated in FIG. 2 represents only the operation regarding the touch operation in the out-of-display touch sensor region 102b of the touch panel 16. Also, the flowchart is repeatedly executed at predetermined time intervals. Note that the operation at the time of the touch operation in the display touch sensor region 102a is a well-known art, and therefore its description will be omitted.

First, the control section 10 judges whether or not the touch operation is performed in the out-of-display touch sensor region 102b of the touch panel 16 (Step S10), and when the touch operation is not performed in the out-of-display touch sensor region 102b (Step S10, NO), the control section 10 ends the processing.

In contrast, when the touch operation is performed in the out-of-display touch sensor region 102b of the touch panel 16, the control section 10 judges whether or not a touch area is equal to or larger than a predetermined threshold value (Step S12). Then, when the touch area on the out-of-display touch sensor region 102b is smaller than the predetermined threshold value (Step S12, NO), the control section 10 ends the processing because there is a possibility that the touch is performed with a fingertip. That is, in this case, the control section 10 notifies the applications and the like of information on the coordinates of the position and the area of the touch operation detected and the like, as usual.

In contrast, when the touch operation is performed in the out-of-display touch sensor region 102b, and the touch area is equal to or larger than the predetermined threshold value (Step S12, YES), the control section 10 judges that touch operation is an invalid touch operation performed by the base of a thumb and the like, and tracks the transfer of the invalid touch operation based on the touch position (Step S14). Subsequently, the control section 10 judges whether or not the invalid touch operation is released (detached) (Step S16), and when the invalid touch operation is not released (Step S16, NO), the processing returns to Step S14, and the control section 10 continuously tracks the transfer of the invalid touch operation.

That is, during tracking, for example, even when the invalid touch operation transfers to the display touch sensor region 102a of the touch panel 16, the control section 10 continuously tracks the invalid touch operation without notifying the information on the coordinates of the position and the area of the touch operation detected and the like. Then, when the invalid touch operation is released (Step S16, YES), the control section 10 clears the information (the coordinates of the touch position, the touch area, and the like) of the invalid touch operation, and ends the processing.

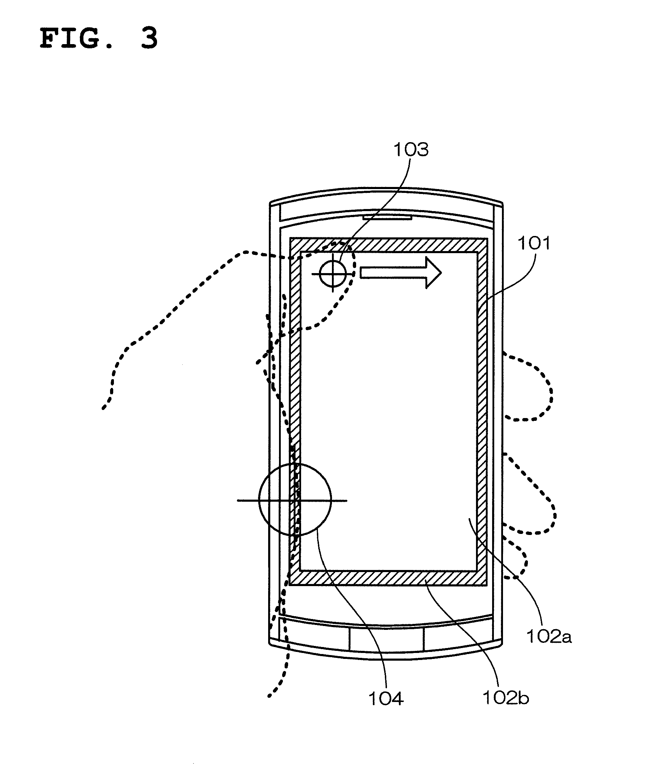

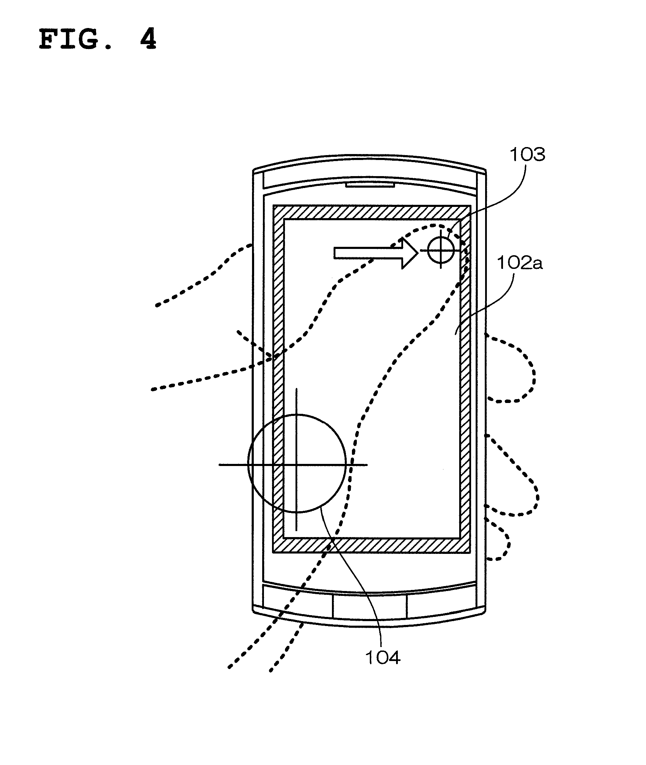

FIG. 3 and FIG. 4 are schematic views to describe a state when the touch operation is detected in the first embodiment. FIG. 3 represents a state where a user touches the center of a circle of the touch detection position 103 in the display area 101 with the user' s thumb in order to operate the mobile terminal with one hand (i.e. with the user's left hand). The radius of the circle represents the contact area which is detected by the touch panel. The touch detection position 103 is positioned in the display touch sensor region 102a, and the control section 10 notifies the applications and the like of information on the coordinates and the area of the touch detection position 103 and the like, as usual.

Also, as illustrated in FIG. 3, a touch detection position 104 corresponding to the position of the base of the thumb is exactly detected in the range of the out-of-display touch sensor region 102b. When the touch attributed to the base of the thumb is detected, the contact area may be large. Accordingly, when the contact area is equal to or larger than a predetermined threshold value, it can be assumed that the touch detected is not performed with the fingertip.

Herein, when judged that the contact area of the touch detection position 104 is equal to or larger than the predetermined threshold value and that the touch detected is not performed with the fingertip, the control section 10 tracks the transfer of the touch detection position 104 hereafter, and does not process the touch operation at the touch detection position 104 as the normal touch operation even when the touch detection position 104 enters the display touch sensor region 102a, as illustrated in FIG. 4, whereby erroneous operations are prevented. Then, until the touch operation at the touch detection position 104 is released, the control section 10 continues the tracking processing, and when the touch operation at the touch detection position 104 is released, the control section 10 clears information associated with to the touch (the coordinates of the touch position, the touch area, and the like).

Note that, the case where the mobile terminal device 1 is held in a portrait orientation is illustrated in FIG. 3 and FIG. 4, but even in a case where the mobile terminal device 1 is held in a landscape orientation, the similar processing can be applied.

According to the above-described first embodiment, when the touch operation a contact area of which is wider than the area of a fingertip, is started in the out-of-display touch sensor region 102b, an error is judged, and the touch operation is tracked, and even when the touch is transferred in the display touch sensor region 102a (which is equal to the display area 101), the touch is not processed as the normal touch operation, whereby erroneous operations due to the applications and the like can be prevented.

Also, the error is judged when the touch operation a contact area of which is wider than the area of a fingertip, is started in the out-of-display touch sensor region 102b, so that the touch operation which is started in the display touch sensor region 102a (which is equal to the display area 101) and a contact area of which is wide, such as a case where the touch were performed with the inner surface of a finger, can be allowed as a correct touch operation, compared with a case where the touch operation a contact area of which is wide is merely eliminated as an erroneous detection.

According to the above-described first embodiment, when the touch operation a contact area of which is wider than the area of a fingertip, such as that of the base of a thumb, is detected in the out-of-display touch sensor region 102b, it is judged that the touch operation is invalid, and the transfer of the touch operation is tracked, and even when the touch operation is transferred to the display touch sensor region 102a, the notification of coordinates is not provided to the high order (applications and the like), whereby erroneous operations can be prevented.

### B. Second Embodiment

Next, the second embodiment of the present invention will be described.

In the above-described first embodiment, the example has been described where the out-of-display touch sensor region 102b is arranged on the top, bottom, right, and left of the display area 101 and uniformly used for erroneous detection. In contrast, the second embodiment is characterized in that the posture of the mobile terminal device 1 is detected by mounting an acceleration sensor and the position of the mobile terminal device 1 held with a hand is assumed, whereby the range of an erroneous detection judgment is limited.

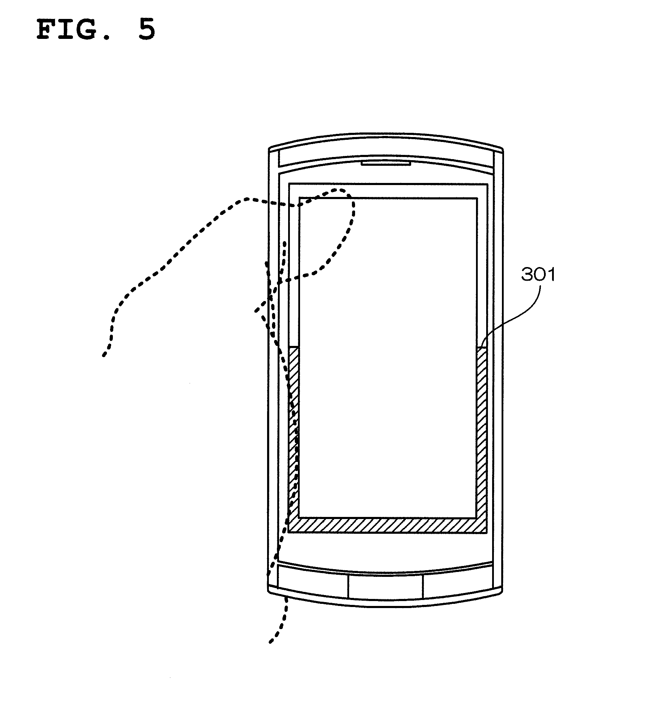

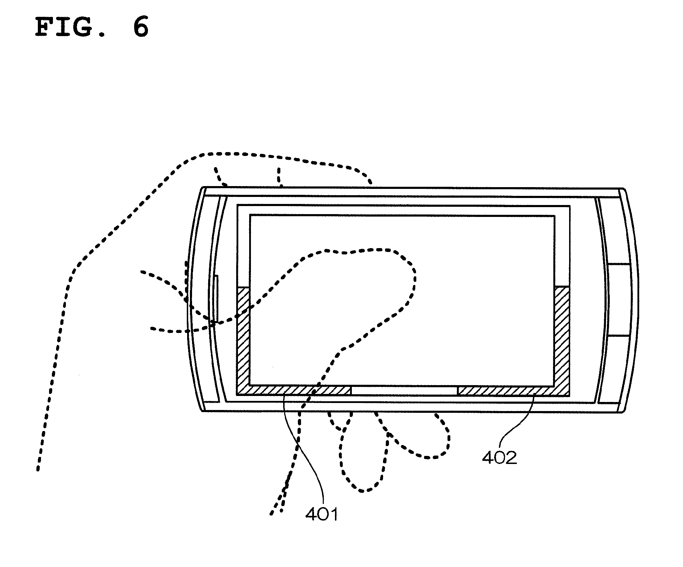

FIG. 5 and FIG.6 are schematic views illustrating the modification example of a judgment area in the out-of-display touch sensor region 102b of the mobile terminal device 1 of the second embodiment. For example, when the mobile terminal device 1 can be assumed to be used in a portrait orientation, as illustrated in FIG. 5, the judgment area may be limited to a lower half range 301 in the out-of-display touch sensor region 102b.

Also, when the mobile terminal device 1 can be assumed to be used in a landscape orientation, as illustrated in FIG. 6, the judgment area may be limited to a lower left corner range 401 and a lower right corner range 402 where there is a possibility that the base of a thumb touches, in the out-of-display touch sensor region 102b.

According to the above-described second embodiment, an advantageous effect that the erroneous detection is less likely to be judged can be achieved even when an operation is performed such that the inner surface of a thumb were dragged from the outside of the display area.

### C. Third Embodiment

Next, the third embodiment of the present invention will be described. In the first embodiment or the second embodiment described above, the out-of-display touch sensor region 102b for detecting the erroneous operation on the touch panel 16 is provided at the outer peripheral portion of the display area of the display section 15. In contrast, the third embodiment is characterized in that a region for detecting the erroneous operation on the touch panel 16, corresponding to the out-of-display touch sensor region 102b, is secured on the outer periphery of the touch panel 16. Accordingly, in the third embodiment, the region corresponding to the out-of-display touch sensor region 102b for detecting the erroneous operation on the touch panel 16 is defined as an outer side region having a predetermined width on the outer periphery of the touch panel 16, and an inner side region with respect to the outer side region, that is, a region corresponding to the display touch sensor region 102a is defined as an inner side region. That is, the touch panel 16 only needs to have a size large enough to detect the touch operation at least on the display area of the display section 15, and the outer side region may be placed on the outer side or the inner side of the display section 15 or may be superimposed on the edge portion of the display section 15 as long as the outer side region is placed at the outer peripheral portion of the touch panel 16. In the first embodiment or the second embodiment described above, the outer side region is provided on the outer side of the display section 15. However, in the third embodiment, a case will be described where the outer side region is placed on the inner side of the display section 15 or superimposed on the edge portion of the display section 15.

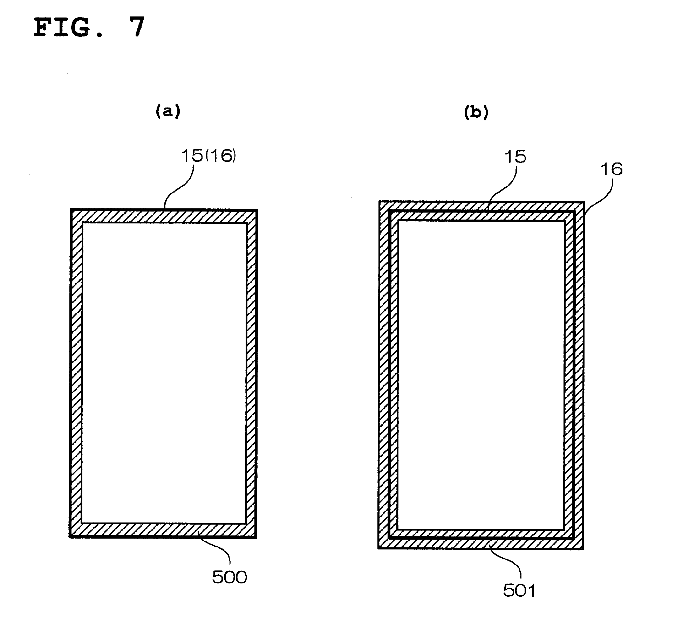

FIGs. 7(a) and (b) are schematic views illustrating the relation between the display area of the display section 15 and the outer side region for detecting the erroneous operation on the touch panel 16, according to the third embodiment. FIG. 7 (a) illustrates an example where the outer peripheral region of the touch panel 16, provided in a manner to be superimposed on the display area of the display section 15, is an outer side region 500 for detecting the erroneous operation on the touch panel 16. In this case, the outer side region 500 is superimposed on the periphery of the display area of the display section 15. Also, FIG. 7 (b) illustrates an example where the outer peripheral region of the touch panel 16, provided to the extent that a peripheral portion protrudes on the outer side of the display area of the display section 15, is an outer side region 501 for detecting the erroneous operation on the touch panel 16. In this case, a part of the outer side region 501 is superimposed on the periphery of the display area of the display section 15.

Note that, in FIGs. 7(a) and (b), the outer side regions 500 and 501 for detecting the erroneous operation on the touch panel 16 are provided in a manner to surround the display section 15, corresponding to the above-described first embodiment, but not limited thereto. The outer side regions 500 and 501 illustrated in FIGs. 7(a) and (b) may be provided in the predetermined region including a lower end of the display section 15 (see FIG. 5), or in the region including the lower right corner and the lower left corner of the display section 15 (see FIG. 6), corresponding to the above-described second embodiment.

According to the above-described third embodiment, the outer side regions 500 and 501 for detecting the erroneous operation on the touch panel 16 are provided such that part or whole of the outer side regions is superimposed on the periphery of the display area of the display section 15, so that a space to provide a region for detecting the erroneous operation can be reduced or entirely eliminated. As a result, the erroneous operation on the touch panel 16 can be prevented without adding a large modification to the mobile terminal device.

Note that, in the embodiments, the present invention has been applied to the cellular phone (smart phone) as the mobile terminal device. However, the present invention is not limited thereto. For example, the present embodiments can be widely applied to mobile information terminals such as game machines, tablet PC (personal computers), notebook PC, music playback players, electronic book browsing terminals, digital cameras and PDA, personal computers and other electronic devices, as long as the electronic devices include the touch panel.

This application is based upon and claims the benefit of priority from the prior Japanese Patent Application No. 2012-046331, filed March 2, 2012, the entire contents of which are incorporated herein by reference.

Hereinafter, the characteristics of the present invention will be additionally described.

The above-described embodiments can be partially or entirely described as the Supplementary Notes described below, but are not limited thereto.

### (Supplementary Note 1)

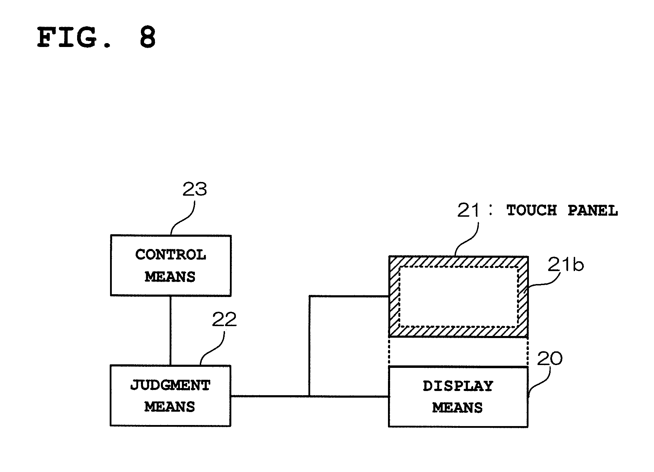

FIG. 8 is a configuration diagram of Supplementary Note 1. Note that, the judgment means 22 and the control means 23 illustrated in FIG. 8 correspond to the function of the control section (CPU) 10 illustrated in FIG. 1. As illustrated in the diagram, the present invention according to a Supplementary Note 1 is a mobile terminal device comprising:
a display means 20,
a touch panel 21 for detecting a touch operation at least on a display area of the display means 20,
a judgment means 22 for judging whether or not a contact area of the touch operation is equal to or larger than a predetermined threshold value when the touch operation on an outer side region 21b which is an outer peripheral portion of the touch panel 21 is detected; and
a control means 23 for disabling the touch operation on the outer side region 21b when judged that the contact area of the touch operation on the outer side region 21b is equal to or larger than the predetermined threshold value.

### (Supplementary Note 2)

The mobile terminal device according to Supplementary Note 1, wherein the control means tracks transfer of the touch operation when judged that the contact area of the touch operation on the outer side region is equal to or larger than the predetermined threshold value, and leaves the touch operation disabled even when detected that the touch operation transfers to an inner side region with respect to the outer side region.

### (Supplementary Note 3)

The mobile terminal device according to Supplementary Note 1 or 2, further comprising a posture detection means for detecting a posture of the device, wherein, when the device can be assumed to be used in a portrait orientation, by the posture detection means, the control means limits a range of detecting the touch operation to a predetermined region including a lower end out of the outer side region.

### (Supplementary Note 4)

The mobile terminal device according to Supplementary Note 3, wherein, when the device can be assumed to be used in a landscape orientation by the posture detection means, the control means limits the range of detecting the touch operation to a region including a lower right corner and a lower left corner, out of the outer side region.

### (Supplementary Note 5)

A method for preventing operational errors, comprising: a detecting step of detecting a touch operation, by means of a touch panel for detecting the touch operation at least on a display area of a display means, on an outer side region which is an outer peripheral portion of the touch panel; a judging step of judging whether or not a contact area of the touch operation on the outer side region is equal to or larger than a predetermined threshold value; and a disabling step of disabling the touch operation on the outer side region when judged that the contact area of the touch operation on the outer side region is equal to or larger than the predetermined threshold value.

### (Supplementary Note 6)

A program to be executed by a computer of a mobile terminal device including a display means and a touch panel for detecting a touch operation at least on a display area of the display means, the program comprising: a touch operation detecting function of detecting the touch operation on an outer side region which is on an outer peripheral portion of the touch panel; a judgment function of judging whether or not a contact area of the touch operation on the outer side region is equal to or larger than a predetermined threshold value; and a touch operation control function of disabling the touch operation on the outer side region when judged that the contact area of the touch operation on the outer side region is equal to or larger than the predetermined threshold value.

### DESCRIPTION OF REFERENCE NUMERALS

- 1: MOBILE TERMINAL DEVICE
- 10: CONTROL SECTION (CPU)
- 11: COMMUNICATION CONTROL SECTION
- 12: ROM
- 13: RAM
- 14: DISPLAY CONTROL SECTION
- 15: DISPLAY SECTION
- 16: TOUCH PANEL
- 17: VOICE PROCESSING SECTION
- 18: SPEAKER
- 19: MICROPHONE
- 101: DISPLAY AREA
- 102A: DISPLAY TOUCH SENSOR REGION
- 102B: OUT-OF-DISPLAY TOUCH SENSOR REGION
- 500, 501: OUTER SIDE REGION

## Claims

1. A mobile terminal device comprising:
a display means;
a touch panel for detecting a touch operation at least on a display area of the display means;
a judgment means for judging whether or not a contact area of the touch operation is equal to or larger than a predetermined threshold value when the touch operation on an outer side region which is an outer peripheral portion of the touch panel is detected; and
a control means for disabling the touch operation on the outer side region when judged that the contact area of the touch operation on the outer side region is equal to or larger than the predetermined threshold value.

2. The mobile terminal device according to claim 1, wherein the control means tracks transfer of the touch operation when judged that the contact area of the touch operation on the outer side region is equal to or larger than the predetermined threshold value, and leaves the touch operation disabled even when detected that the touch operation transfers to an inner side with respect to the outer side region.

3. The mobile terminal device according to claim 1 or 2, further comprising a posture detection means for detecting a posture of the device,
wherein, when the device can be assumed to be used in a portrait orientation, by the posture detection means, the control means limits a range of detecting the touch operation to a predetermined region including a lower end out of the outer side region.

4. The mobile terminal device according to claim 3, wherein, when the device can be assumed to be used in a landscape orientation by the posture detection means, the control means limits the range of detecting the touch operation to a region including a lower right corner and a lower left corner, out of the outer side region.

5. A method for preventing operational errors, comprising:
a detecting step of detecting a touch operation, by means of a touch panel for detecting the touch operation at least on a display area of a display means, on an outer side region which is an outer peripheral portion of the touch panel;
a judging step of judging whether or not a contact area of the touch operation on the outer side region is equal to or larger than a predetermined threshold value; and
a disabling step of disabling the touch operation on the outer side region when judged that the contact area of the touch operation on the outer side region is equal to or larger than the predetermined threshold value.

6. A program to be executed by a computer of a mobile terminal device including a display means and a touch panel for detecting a touch operation at least on a display area of the display means, the program comprising:
a touch operation detecting function of detecting the touch operation on an outer side region which is on an outer peripheral portion of the touch panel;
a judgment function of judging whether or not a contact area of the touch operation on the outer side region is equal to or larger than a predetermined threshold value; and
a touch operation control function of disabling the touch operation on the outer side region when judged that the contact area of the touch operation on the outer side region is equal to or larger than the predetermined threshold value.
